# FASCICULE DE BREVET EUROPEEN

(11) **EP 3 432 452 B1**
(45) Date de publication et mention de la délivrance du brevet: **14.01.2026**
(21) Numéro de dépôt: 18181458.3
(22) Date de dépôt: 03.07.2018
(51) Int. Cl.: H02K 3/52, H02K 1/14, H02K 1/17, H02K 15/04

(54) **MOTEUR COUPLE COMPRENANT UN SUPPORT DE BOBINES STATORIQUES ET UN CORPS MAGNÉTIQUE Y COMPRIS UN AIMANT PERMANENT**
DREHMOMENTMOTOR UMFASSEND EINE SPULENHALTERUNG UND EINEN MAGNETKERN INKLUSIVE EINEM DAUERMAGNETEN
TORQUE MOTOR COMPRISING A STATOR COIL HOLDER AND A MAGNETIC CORE INCLUDING A PERMANENT MAGNET

(30) Priorité: 17.07.2017 FR 1756764
(43) Date de publication de la demande: 23.01.2019
(73) Titulaire: Liebherr-Aerospace Toulouse SAS, 31200 Toulouse (FR)
(72) Inventeur: VERHILLE, Loïc, 82170 MONBEQUI (FR); RAMADOUR, François, 31620 CASTELNAU D'ESTRETEFONDS (FR); VILAMOT, Raphael, 31140 PECHBONNIEU (FR); WOJCIESZONAK, Rémi, 31390 LAFITTE VIGORDANE (FR)
(74) Mandataire: Bringer, Mathieu

(56) Documents cités:
- EP-A2- 1 583 201
- DE-A1- 19 622 186
- DE-A1- 4 101 666
- JP-A- 2011 109 785

## Description

### 1. Domaine technique de l'invention

L'invention concerne un moteur couple, en particulier un moteur couple à débattement limité pour des applications aéronautiques.

### 2. Arrière-plan technologique

Les moteurs couples sont des moteurs électriques qui visent à obtenir un couple par la circulation d'un courant électrique d'intensité prédéterminée dans des bobines placées dans un champ magnétique permanent.

Un moteur couple comprend un induit, qui est la partie du moteur qui porte les bobines parcourues par le courant et un inducteur, qui est la partie complémentaire du moteur qui génère le champ magnétique permanent.

Ce champ magnétique permanent est en général généré par des aimants permanents ménagés au rotor ou au stator du moteur.

Les moteurs couples sont fréquemment utilisés dans le domaine de l'aéronautique, par exemple pour équiper des actionneurs pneumatiques de vannes de prélèvement d'air, des vannes de régulation de pression cabine, des systèmes de régulation de débit de carburant, etc.

Ces applications aéronautiques imposent une pluralité de contraintes sur les moteurs couples, notamment en terme de masse, de volume, de température, de comportement vibratoire, etc.

Aussi, l'architecture privilégiée comprend souvent un stator monobloc portant au moins un aimant permanent, des bobines statoriques et un rotor formant l'induit. Cette architecture fournit des moteurs qui sont compacts et qui minimisent l'inertie du rotor.

Cette architecture impose certaines contraintes lors de la fabrication du moteur parmi lesquelles la nécessité d'intégrer les aimants permanents très en amont du processus de fabrication, et notamment en amont des opérations de bobinage ; la réalisation des bobinages électriques statoriques sur des outillages spécifiques ; l'isolation des bobinages préalablement à leur intégration dans le moteur ; et l'intégration des bobinages statoriques ainsi réalisées à l'intérieur du circuit magnétique monobloc statorique par des opérations délicates qui consistent à rapporter radialement les bobines sur le circuit magnétique (par l'intérieur ou l'extérieur du circuit magnétique, et qui consiste pour certaines applications à mettre en forme manuellement les bobines statoriques et à les compacter pour pouvoir les loger dans le stator monobloc).

Ce procédé de fabrication est long, fastidieux et couteux. En outre, il présente des risques de mauvaise isolation électrique résultant des manipulations des bobines statoriques lors de leur intégration dans le circuit magnétique statorique. Aussi, il est fréquent lors des opérations d'assemblage de ces moteurs couples de devoir mettre au rebut un nombre non négligeable de pièces produites du fait d'une altération des bobines statoriques lors de leur intégration dans le circuit statorique. En outre, ce procédé de fabrication empêche l'utilisation de fils à revêtement céramique.

Les inventeurs ont donc cherché à améliorer les moteurs couples, en particulier les moteurs couples destinés à des applications aéronautiques. Les inventeurs ont notamment cherché à proposer une nouvelle structure de moteur couple qui permet de faciliter les opérations d'assemblage de ce moteur couple. Un moteur couple comprenant un stator et un rotor s'étendant le long d'un même axe central, ledit stator comprenant en outre un corps magnétique monobloc, au moins une paire de dents radiales s'étendant le long de l'axe central et définissant des encoches de réception de bobines statoriques et formant un entrefer radial avec ledit rotor, au moins un aimant permanent porté par ledit corps magnétique monobloc et comprenant un support de bobinage des bobines statoriques comprenant un corps creux s'étendant le long de l'axe central et délimitant une enceinte de réception dudit rotor, ledit support comprenant en outre des logements de réception desdits bobines statoriques s'étendant dans des plans parallèles à l'axe central, et présentant des parois radiales périphériques conformées auxdites encoches de réception dudit corps magnétique monobloc, est également décrit dans DE 19622186 A. Des moteurs similaires sont décrit dans EP 1583201 A et JP 2011-109785 A.

### 3. Objectifs de l'invention

L'invention vise à fournir un moteur couple qui pallie au moins certains des inconvénients des moteurs couples connus.

L'invention vise en particulier à fournir, dans au moins un mode de réalisation, un moteur couple qui présente une structure permettant de faciliter les opérations d'assemblage et de fabrication.

L'invention vise en particulier à fournir, dans au moins un mode de réalisation, un moteur couple qui présente une structure permettant de limiter les mises au rebut des moteurs couples au cours des opérations d'assemblage.

L'invention vise également à fournir, dans au moins un mode de réalisation, un moteur couple qui présente des performances d'isolation électrique améliorées par rapport aux solutions antérieures.

L'invention vise également à fournir, dans au moins un mode de réalisation, un moteur couple dont la structure permet de réduire sensiblement le temps et le coût de fabrication et d'assemblage.

L'invention vise aussi à fournir un moteur couple dont la structure permet une adaptation particulière à l'automatisation de la fabrication, c'est-à-dire avec des opérations manuelles réduites voire nulles.

L'invention vise également à fournir, dans au moins un mode de réalisation, un moteur couple dont la structure permet une adaptation à une utilisation en mode sans cadre, plus connu sous la dénomination anglaise de « *frameless* ».

L'invention vise également à fournir un moteur couple dont la structure permet à moindre coût de réduire la distance radiale entre les dents du stator et les dents du rotor formant l'entrefer du moteur.

### 4. Exposé de l'invention

Pour ce faire, l'invention concerne un moteur couple comprenant un stator et un rotor s'étendant le long d'un même axe central, ledit stator comprenant en outre un corps magnétique monobloc, au moins une paire de dents radiales s'étendant le long de l'axe central et définissant des encoches de réception de bobines statoriques et formant un entrefer radial avec ledit rotor, et au moins un aimant permanent porté par ledit corps magnétique.

Un moteur couple selon l'invention comprend un stator et un rotor s'étendant le long d'un même axe central, ledit stator comprenant en outre un corps magnétique monobloc, au moins une paire de dents radiales s'étendant le long de l'axe central et définissant des encoches de réception de bobines statoriques et formant un entrefer radial avec ledit rotor, au moins un aimant permanent porté par ledit corps magnétique monobloc, et comprenant un support de bobinage des bobines statoriques comprenant un corps creux s'étendant le long de l'axe central et délimitant une enceinte de réception dudit rotor, ledit support comprenant en outre des logements de réception desdits bobines statoriques s'étendant dans des plans parallèles à l'axe central, et présentant des parois radiales périphériques conformées auxdites encoches de réception dudit corps magnétique monobloc, caractérisé en ce que dans logements de réception sont logés lesdites bobines statoriques avant l'assemblage dudit support dans ledit corps magnétique monobloc, ledit support de bobinage est formé d'un seul tenant et présentant en outre une extrémité axiale des logements de réception plus adjacent à l'axe central que l'autre extrémité axiale ayant un diamètre plus grand que le diamètre du rotor de sorte que ledit rotor puisse être logé dans ledit support par cette extrémité axiale, de sorte que l'intégration des bobines statoriques dans ledit stator consiste à insérer axialement, dans ledit corps magnétique monobloc, ledit support de bobinage équipé desdites bobines statoriques.

Un moteur couple selon l'invention comprend donc un support de bobinage des bobines statoriques. Ce support de bobinage est conformé au corps magnétique statorique monobloc de sorte qu'une fois les bobines montées dans les logements de réception du support de bobinage, il est possible, lors des opérations d'assemblage de simplement glisser axialement le support de bobinage dans le circuit magnétique monobloc. Cette insertion axiale du support de bobinage dans les encoches de réception du corps magnétique monobloc assure le placement des bobines statoriques, autour des dents radiales. En d'autres termes, selon l'invention, les bobines statoriques sont d'abord montées sur le support de bobinage, dans les logements de réception des bobines, puis intégrées dans les encoches formées entre les dents radiales par le positionnement du support de bobinage dans les encoches ainsi formées du corps magnétique monobloc du stator. Contrairement aux solutions antérieures, l'architecture du moteur couple selon l'invention n'est pas configurée pour une intégration radiale des bobines statoriques autour des dents radiales, mais pour une intégration axiale par l'intermédiaire d'une pièce supplémentaire, qui est le support de bobinage. Cette pièce supplémentaire, au lieu de compliquer les opérations de fabrication et d'assemblage, facilite au contraire les opérations d'assemblage en permettant l'insertion axiale des bobines, une fois ces bobines montées sur le support de bobinage.

En outre, le support de bobinage est creux et délimite une enceinte de réception du rotor de sorte qu'il est aisé d'assembler un moteur couple selon l'invention, en insérant axialement le rotor dans l'enceinte de réception, dans lequel le rotor peut prendre place une fois le support de bobinage équipé des bobines statoriques inséré axialement dans le corps magnétique du stator, ou avant que le support de bobinage équipé des bobines statoriques ne soit inséré axialement dans le corps magnétique du stator.

Avantageusement et selon l'invention, ledit support de bobinage est isolant électriquement, au moins au niveau des logements de réception des bobines statoriques.

Selon cette variante avantageuse, cette pièce supplémentaire (le support de bobinage) forme une isolation électrique entre le circuit magnétique et les bobines statoriques. Les logements de réception des bobines comprennent des parois radiales périphériques conformées aux encoches du stator de sorte que les bobines sont parfaitement isolées électriquement du circuit magnétique, tout en limitant au maximum l'encombrement, une fois le support de bobinage inséré dans le stator monobloc.

Avantageusement et selon l'invention, ledit support de bobinage des bobines statoriques est amagnétique.

Un support selon cette variante permet de ne pas perturber le champ magnétique généré par les bobines et les aimants, dans l'entrefer, c'est-à-dire dans l'espace formé entre les dents du stator et le rotor.

En d'autres termes, cette pièce supplémentaire permet non seulement de faciliter les opérations d'assemblage d'un moteur couple par l'insertion axiale des bobines statoriques, mais également d'améliorer les performances du moteur.

Avantageusement et selon l'invention, ledit support de bobinage est formé d'un seul tenant.

Cette variante permet de disposer d'un support de bobinage monobloc qui peut être inséré d'un seul mouvement dans le circuit magnétique. Selon d'autres variantes, le support peut être formé de plusieurs pièces, par exemple une pièce pour chaque logement de réception d'une bobine, qui sont assemblées les unes aux autres avant insertion axiale dans le circuit magnétique. Selon une autre variante, les différentes pièces sont insérées séparément axialement dans le circuit magnétique.

Avantageusement et selon l'invention, ledit support de bobinage est formé en céramique.

Cette variante avantageuse permet d'utiliser les moteurs couples dans des environnements extrêmes de température.

Avantageusement et selon l'invention, lesdites bobines statoriques sont formés de fils revêtus d'isolant fragile, c'est-à-dire particulièrement sensibles à la détérioration lors de leur mise en forme (plasticité). On peut citer parmi ces isolants les isolants d'origine minérale, comme par exemple la céramique.

Les moteurs couples de l'art antérieur sans support de bobinage ne permettent pas l'utilisation de bobines réalisées à partir de fils revêtus d'isolant en céramique du fait de la fragilité de telles bobines et des risques de détérioration des bobines lors de manipulations pour l'insertion radiale des bobines. Un moteur couple selon cette variante de l'invention permet au contraire d'utiliser des bobines réalisées à partir de fils revêtus d'isolant en céramique, ce qui ouvre des nouvelles applications pour ce moteur couple, notamment en termes de tenue à la température.

Avantageusement et selon l'invention, ledit stator comprend deux aimants permanents agencés en regard l'un de l'autre, une paire de dents radiales définissant deux encoches de réception de deux bobines statoriques et ledit support amagnétique comprend deux logements de réception desdites bobines statoriques.

Cette variante avantageuse permet de disposer d'un moteur couple dont les coûts de fabrication sont faibles tout en présentant des performances compatibles avec diverses applications aéronautiques, notamment pour les systèmes de pilotage d'actionneurs pneumatiques de vanne de prélèvement d'air ou de régulation de pression cabine.

Avantageusement et selon l'invention, ledit support de bobinage porte des paliers dudit rotor.

Cette variante avantageuse confère au support de bobinage, non seulement une fonction de support des bobines, facilitant l'insertion axiale des bobines dans le circuit magnétique, mais également une fonction mécanique de support des éléments de guidage en rotation et d'arrêt axial du rotor.

En variante ou en combinaison, ledit support comprend des butées s'étendant radialement et formant des butées angulaires du rotor.

Cette variante confère une fonctionnalité supplémentaire au support de bobinage, qui est de limiter le déplacement angulaire du rotor dans l'enceinte de réception du rotor par la présence de butées radiales qui font saillies dans l'enceinte de réception.

Avantageusement et selon l'invention, ledit support de bobinage des bobines statoriques comprend en outre un compartiment périphérique de connexion des bobinages statoriques avec un fil d'alimentation dudit moteur couple.

Ce compartiment périphérique permet de faciliter les opérations de liaison électrique entre un fil d'alimentation extérieur et les bobines statoriques. Dans le cas où le support de bobinage est isolant, ce compartiment de connexion assure également l'isolation électrique du fait des caractéristiques du support de bobinage.

Avantageusement et selon l'invention, le support de bobinage des bobines statoriques comprend en outre au moins une encoche configurée pour guider et maintenir au moins un fil d'alimentation dudit moteur couple.

Ces encoches de guidage peuvent par exemple être ménagées au niveau d'un socle du support de bobinage pour guider le fil d'alimentation vers le compartiment de connexion électrique par exemple.

L'invention concerne également un procédé d'assemblage d'un moteur couple comprenant un stator et un rotor s'étendant le long d'un même axe central, ledit stator comprenant en outre un corps magnétique monobloc, au moins une paire de dents radiales s'étendant le long de l'axe central et définissant des encoches de réception de bobines statoriques et formant un entrefer radial avec ledit rotor, au moins un aimant permanent porté par ledit corps magnétique monobloc, un support de bobinage, étant formé d'un seul tenant, des bobines statoriques comprenant un corps creux s'étendant le long de l'axe central et délimitant une enceinte de réception dudit rotor, ledit support comprenant en outre des logements de réception desdits bobines statoriques s'étendant dans des plans parallèles à l'axe central, et présentant des parois radiales périphériques conformées auxdites encoches de réception dudit corps magnétique monobloc, ledit support présentant en outre une extrémité axiale des logements de réception plus adjacent à l'axe central que l'autre extrémité axiale ayant un diamètre plus grand que le diamètre du rotor, caractérisé en ce qu'il comprend les étapes suivantes :
- montage des bobines statoriques sur le support de bobinage,
- insertion axiale du support de bobinage équipé des bobines statoriques dans le corps magnétique monobloc du stator,
- insertion axiale du rotor dans le corps creux du support de bobinage.

Un procédé d'assemblage selon l'invention permet donc d'assembler un moteur selon l'invention en montant tout d'abord les bobines statoriques sur le support de bobinage, puis en insérant axialement le support de bobinage équipé des bobines dans le stator du moteur. L'insertion du rotor peut se faire soit simultanément à l'insertion du support de bobinage, soit de manière subséquente.

Selon une variante avantageuse du procédé de montage, les bobines sont imprégnées après montage sur le support de bobinage des bobines.

Le montage des bobines sur le support de bobinage peut se faire soit par le maintien en position fixe du support de bobinage et la mise en rotation d'un fil de bobinage dans les logements de réception du support de bobinage, soit par le maintien en position fixe du fil de bobinage et la mise en rotation du support de bobinage autour du fil de bobinage.

L'invention concerne également un moteur couple et un procédé d'assemblage d'un moteur couple caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective éclatée d'un moteur couple selon un mode de réalisation de l'invention,
- la figure 2 est une vue schématique en perspective d'un support de bobinage d'un moteur couple selon un mode de réalisation de l'invention,
- les figures 3a à 3d sont des vues schématiques en perspective des différentes étapes d'insertion axiale d'un support de bobinage dans un stator d'un moteur couple selon un mode de réalisation de l'invention,
- la figure 4 est une vue schématique en perspective d'un stator d'un moteur couple selon un mode de réalisation de l'invention,
- la figure 5 est une vue schématique en perspective d'un support de bobinage équipé de bobines statoriques d'un moteur couple selon un mode de réalisation.

### 6. Description détaillée d'un mode de réalisation de l'invention

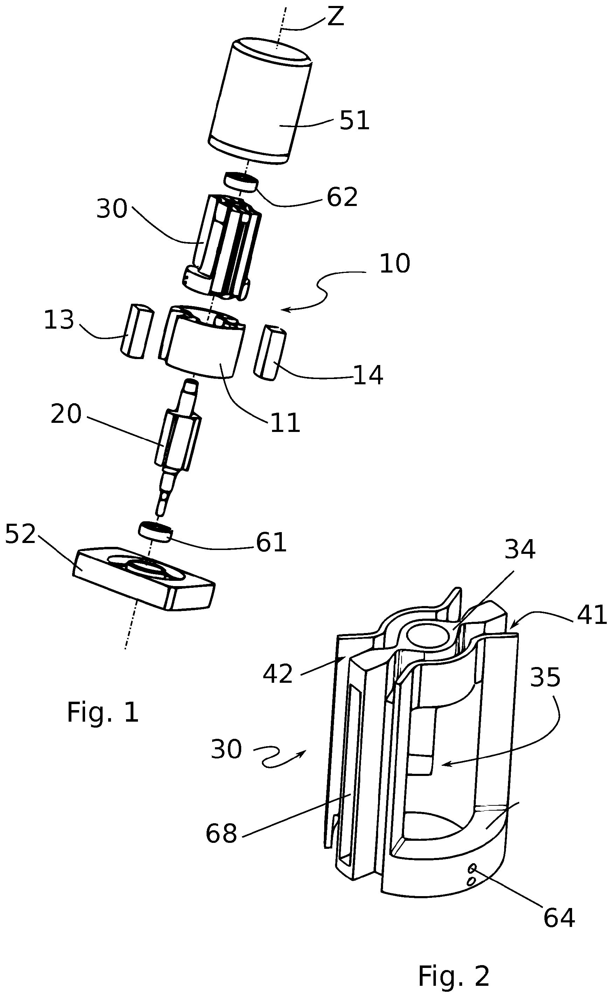

Sur les figures, les échelles et les proportions ne sont pas strictement respectées et ce, à des fins d'illustration et de clarté. Dans toute la description détaillée qui suit en référence aux figures, sauf indication contraire, chaque élément du moteur couple est décrit tel qu'il est agencé lorsque le moteur couple est assemblé. En outre, les éléments identiques, similaires ou analogues sont désignés par les mêmes références dans toutes les figures. Les termes axial et radial sont utilisés à titre non limitatif en référence à l'axe principal Z le long duquel s'étend le moteur couple, représenté notamment sur la figure 1. Enfin, pour un élément donné, les termes intérieur et extérieur ou périphérique sont utilisés pour désigner respectivement les parties de l'élément voisines de l'axe principal Z ou éloignées de l'axe principal Z.

Un moteur couple selon l'invention comprend, tel que représenté sur la figure 1, un stator 10 et un rotor 20 s'étendant le long d'un même axe central Z.

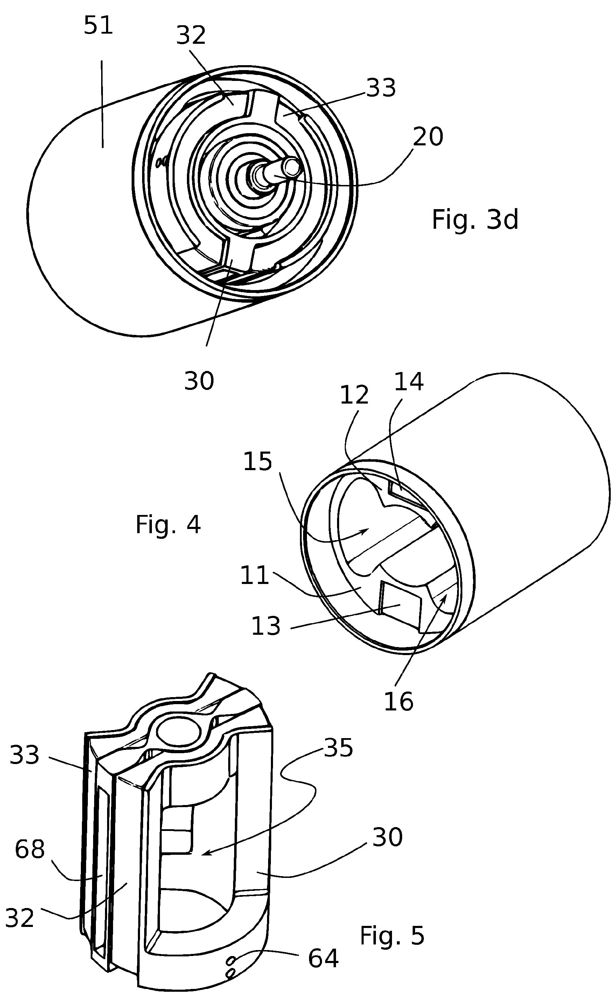

Le stator 10 selon le mode de réalisation des figures comprend, tel que représenté notamment sur la figure 4, un corps magnétique monobloc 11, une paire de dents 12 radiales s'étendant le long de l'axe central Z et qui définissent entre elles deux encoches 15, 16 de réception de bobines statoriques, et deux aimants permanents 13, 14 portés latéralement par le corps magnétique monobloc 11.

Le moteur couple selon l'invention comprend en outre un support 30 de bobinage des bobines statoriques 32, 33 comprenant un corps creux 34 qui s'étend le long de l'axe central Z.

Selon le mode de réalisation des figures, ce support 30 est formé d'un seul tenant. Cela étant, selon d'autres modes de réalisation, le support 30 peut être formé d'une ou plusieurs pièces assemblées les unes aux autres par des moyens d'assemblage.

Selon le mode de réalisation des figures, le corps creux 34 définit en son centre une enceinte 35 de réception du rotor 20. Cette enceinte 35 débouche à chaque extrémité axiale du corps creux 34 de sorte que le rotor 20 puisse être logé dans l'enceinte par une extrémité axiale du corps creux au cours des opérations de montage du moteur couple.

Le support 30 comprend, tel que représenté sur la figure 2, des logements 41, 42 de réception des bobines statoriques 32, 33. Ces bobines 32, 33 s'étendent dans des plans parallèles à l'axe central Z.

La figure 2 illustre le support 30 libre de toutes bobines 32, 33 statoriques et la figure 5 illustre le support 30 équipé des bobines 32, 33 statoriques.

Le support 30, une fois équipé des bobines statoriques 32, 33 est conformé aux encoches 15, 16 de réception du corps magnétique 11 du stator, formées entre les dents radiales du corps magnétique 11 du stator.

Ainsi, l'intégration des bobines statoriques 32, 33 dans le stator 10 consiste à insérer axialement, dans ledit corps magnétique monobloc 11 du stator, le support 30 équipé desdites bobines statoriques 32, 33.

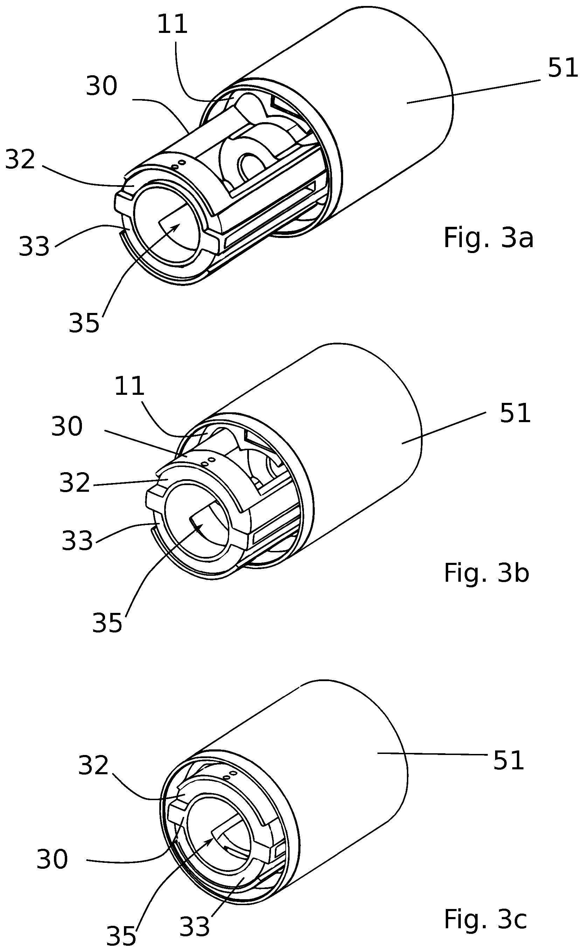

Les différentes étapes mises en œuvre par un procédé d'assemblage d'un moteur couple selon l'invention sont schématiquement représentées par les figures 3a à 3d. Sur ces figures, le corps magnétique monobloc 11 est déjà inséré dans un carter 51.

Sur la figure 3a, le support 30 de bobinage équipé des bobines 32, 33 statoriques entre dans le corps magnétique monobloc 11.

Sur la figure 3b, le support 30 de bobinage est partiellement inséré dans le corps magnétique monobloc 11.

Sur la figure 3c, le support de bobinage est totalement inséré dans le corps magnétique monobloc 11. Les bobines 32, 33 statoriques sont donc en place entre les dents radiales du stator. Cette mise en place des bobines 32, 33 statoriques a été obtenue uniquement par un déplacement axial du support de bobinage.

Sur la figure 3d, le rotor 20 a été inséré axialement dans l'enceinte 35 du support 30 de bobinage. La dernière étape de l'assemblage non représentée sur les figures consiste à équiper le moteur d'un fil d'alimentation et à visser un socle 52 sur le carter 51 du moteur.

L'assemblage d'un moteur couple selon l'invention est donc simplifié en permettant le montage des bobines statoriques 32, 33 sur le support 30, puis l'insertion du support équipé de bobines dans le stator. Le montage des bobines statoriques 32, 33 dans les logements 41, 42 de réception peut être réalisé par la mise en œuvre d'une chaine automatisée de montage ce qui simplifie et accélère les opérations de montage par rapport à des opérations manuelles. De même, les opérations d'insertion axiale du support de bobinage dans le corps magnétique monobloc du stator et l'insertion axiale du rotor peuvent être automatisées.

En outre, le support de bobinage équipé des bobines étant conformé aux encoches 15, 16 du stator, les performances diélectriques du moteur couple selon l'invention sont améliorées par rapport aux moteurs couples de l'art antérieur.

Le recours à un support de bobinage permet également de minimiser la distance radiale séparant les dents du stator et du rotor et formant l'entrefer du moteur. Cet entrefer optimisé permet de fournir un moteur couple présentant des performances électromécaniques améliorées par rapport aux solutions antérieures

De préférence, le support de bobinage est amagnétique et isolant électriquement. Il est par exemple formé en céramique.

Un tel support en céramique permet de ne pas perturber le champ magnétique généré par les bobines et les aimants, dans l'entrefer du moteur, ce qui contribue à améliorer les performances d'un moteur couple selon ce mode de réalisation.

Selon un mode de réalisation de l'invention, les bobines statoriques 32, 33 sont formées à partir de fils revêtus d'isolant en céramique. Le moteur couple selon l'invention n'étant plus soumis aux risques de détérioration des bobines par des manipulations complexes d'insertion des bobines dans le stator, un moteur couple peut comprendre selon un mode de réalisation avantageux des fils revêtus de céramique.

Cela permet au moteur couple selon ce mode de réalisation de l'invention d'être utilisé dans des environnements moteurs (qui peuvent présenter des températures de l'ordre de 450°C) sans nécessiter l'adjonction d'un moyen de ventilation spécifique du moteur couple.

Le moteur couple selon le mode de réalisation des figures comprend également un carter 51 et un socle 52. Le carter 51 et le socle 52 sont configurés pour pouvoir être solidarisés l'un à l'autre de manière à enfermer les différents éléments du moteur couple. Pour ce faire, le carter 51 peut comprendre, selon un mode de réalisation non représenté sur les figures des languettes radiales dans lesquelles sont ménagées des orifices de passage d'éléments de visserie en regard d'orifices conjugués formées dans le socle 52. Bien entendu, d'autres moyens d'assemblage entre le carter 51 et le socle 52 peuvent être prévus sans modifier l'objet de l'invention. Il peut s'agir de filetages ménagés sur la paroi périphérique du carter 51 et conjugués à des filetages ménagés sur le socle 52. Il peut s'agir de moyens d'encliquetage ou tous moyens équivalents.

Le moteur couple comprend également des paliers 61, 62 du rotor. Selon un mode de réalisation de l'invention, ces paliers 61, 62 sont directement portés par le support 30 de bobinage, ce qui limite le nombre de pièces du moteur couple et facilite son montage.

Le support de bobinage comprend également et tel que représenté sur les figures 2 et 5, un compartiment 68 périphérique de connexion des bobinages statoriques avec un fil d'alimentation du moteur couple.

Ce compartiment 68 périphérique est formé, selon le mode de réalisation des figures, dans une aile latérale du support de bobinage qui s'étend le long de l'axe central entre les logements de réception 41, 42 des bobines statoriques. Ce compartiment 68 présente au moins une première ouverture configurée pour recevoir un fil d'alimentation du moteur couple et une deuxième ouverture configurée pour recevoir une extrémité des fils des bobines statoriques. Cette deuxième ouverture destinée à recevoir le fil des bobines statoriques est par exemple formée au niveau d'une paroi interne du compartiment et la première ouverture est par exemple formée au niveau d'une paroi externe du compartiment. Selon un mode de réalisation, ce compartiment 68 périphérique est configuré pour recevoir une fiche d'alimentation électrique conformée à une fiche de bobinage configurée pour recevoir une extrémité des fils des bobines statoriques de telle sorte que l'insertion de la fiche d'alimentation dans le compartiment assure spontanément la connexion électrique avec les fils des bobines statoriques reliés à la fiche de bobinage.

Le support de bobinage comprend également et tel que représenté sur les figures 2 et 5, deux orifices 64 ménagés au voisinage l'un de l'autre dans la paroi périphérique du support de bobinage et formant des moyens de guidage et de maintien d'un fil d'alimentation du moteur couple. Selon une autre variante, les moyens de guidage et de maintien du fil d'alimentation sont formés par une encoche aménagée au niveau de la base du support de bobinage.

Un moteur couple selon le mode de réalisation des figures permet à la fois de faciliter les opérations d'assemblage du moteur et d'améliorer les caractéristiques de tenue diélectrique.

L'invention ne se limite pas seulement au mode de réalisation représenté sur les figures. En particulier, le support de bobinage peut présenter d'autres formes du moment qu'il est conformé au stator monobloc pour permettre une insertion axiale du support de bobinage équipé des bobines statoriques.

## Revendications

1. Moteur couple comprenant un stator (10) et un rotor (20) s'étendant le long d'un même axe central (Z), ledit stator (10) comprenant en outre un corps magnétique monobloc (11), au moins une paire de dents radiales (12) s'étendant le long de l'axe central (Z) et définissant des encoches (15, 16) de réception de bobines statoriques (32, 33) et formant un entrefer radial avec ledit rotor, au moins un aimant permanent (13, 14) porté par ledit corps magnétique monobloc (11), et comprenant un support (39) de bobinage des bobines statoriques (32, 33) comprenant un corps creux (34) s'étendant le long de l'axe central (Z) et délimitant une enceinte (35) de réception dudit rotor (20), ledit support (30) comprenant en outre des logements (41, 42) de réception desdits bobines statoriques (32, 33) s'étendant dans des plans parallèles à l'axe central (Z) et présentant des parois radiales périphériques conformées auxdites encoches (15, 16) de réception dudit corps magnétique monobloc (11), **caractérisé en ce que** lesdites bobines statoriques (32, 33) sont logées dans les logements (41, 42) de réception avant l'assemblage dudit support (30) dans ledit corps magnétique monobloc (11), ledit support est formé d'un seul tenant et présentant en outre une extrémité axiale des logements (41, 42) de réception plus adjacent à l'axe central (Z) que l'autre extrémité axiale ayant un diamètre plus grand que le diamètre du rotor de sorte que ledit rotor puisse être logé dans ledit support par cette extrémité axiale.

2. Moteur couple selon la revendication 1, **caractérisé en ce que** ledit support (30) de bobinage est isolant électriquement, au moins au niveau des logements de réception des bobines statoriques (32, 33).

3. Moteur couple selon l'une des revendications 1 à 2, **caractérisé en ce que** ledit support (30) de bobinage est amagnétique.

4. Moteur couple selon l'une des revendications 1 à 3, **caractérisé en ce que** ledit support (30) de bobinage est en matériau en céramique.

5. Moteur couple selon l'une des revendications 1 à 4, **caractérisé en ce que** ledit stator (10) comprend deux aimants permanents (13, 14) agencés en regard l'un de l'autre, une paire de dents radiales (12) définissant deux encoches (15, 16) de réception de deux bobines statoriques (32, 33) et **en ce que** ledit support (30) comprend deux logements (41, 42) de réception desdites bobines statoriques (32, 33).

6. Moteur couple selon l'une des revendications 1 à 5, **caractérisé en ce que** lesdites bobines statoriques (32, 33) sont formées de fils revêtus d'un isolant d'origine minérale, tel que la céramique.

7. Moteur couple selon l'une des revendications 1 à 6, **caractérisé en ce que** ledit support (30) porte des paliers dudit rotor (20).

8. Moteur couple selon l'une des revendications 1 à 7, **caractérisé en ce que** ledit support (30) comprend des butées s'étendant radialement et formant des butées angulaires du rotor.

9. Moteur couple selon l'une des revendications 1 à 8, **caractérisé en ce que** ledit support (30) comprend en outre un compartiment périphérique de connexion des bobinages statoriques avec un fil d'alimentation dudit moteur couple.

10. Moteur couple selon l'une des revendications 1 à 9, **caractérisé en ce que** ledit support (30) comprend en outre une encoche de guidage configurée pour pouvoir guider et maintenir au moins un fil d'alimentation dudit moteur couple.

11. Procédé d'assemblage d'un moteur couple comprenant un stator (10) et un rotor (20) s'étendant le long d'un même axe central (Z), ledit stator (10) comprenant en outre un corps magnétique monobloc (11), au moins une paire de dents radiales (12) s'étendant le long de l'axe central (Z) et définissant des encoches (15, 16) de réception de bobines statoriques (32, 33) et formant un entrefer radial avec ledit rotor, au moins un aimant permanent (13, 14) porté par ledit corps magnétique monobloc (11), un support (30) de bobinage, étant formé d'un seul tenant, des bobines statoriques (32, 33) comprenant un corps creux (34) s'étendant le long de l'axe central (Z) et délimitant une enceinte (35) de réception dudit rotor (20), ledit support (30) comprenant en outre des logements (41, 42) de réception desdits bobines statoriques (32, 33) s'étendant dans des plans parallèles à l'axe central (Z), et présentant des parois radiales périphériques conformées auxdites encoches (15, 16) de réception dudit corps magnétique monobloc (11), ledit support présentant en outre une extrémité axiale des logements (41, 42) de réception plus adjacent à l'axe central (Z) que l'autre extrémité axiale ayant un diamètre plus grand que le diamètre du rotor (20),
**caractérisé en ce qu'**il comprend les étapes suivantes :
- montage des bobines statoriques (32,33) sur le support (30) bobinage,
- insertion axiale du support (30) bobinage équipé des bobines statoriques (32,33) dans le corps magnétique monobloc (11) du stator,
- insertion axiale du rotor (20) dans le corps (34) du support (30) bobinage.

## Patentansprüche

1. Drehmomentmotor mit einem Stator (10) und einem Rotor (20), die sich entlang derselben Mittelachse (Z) erstrecken, worin der Stator (10) zudem umfasst, einen einteiligen Magnetkörper (11), mindestens ein Paar radiale Zähne (12), die sich entlang der Mittelachse (Z) erstrecken und Nuten (15, 16) zur Aufnahme von Statorspulen (32, 33) bilden und einen radialen Luftspalt mit dem Rotor ausbilden, mindestens einen Permanentmagneten (13, 14), der von dem einteiligen Magnetkörper (11) getragen wird, und einen Wicklungsträger (30) für die Statorwicklungen (32, 33), der einen Hohlkörper (34) umfasst, der sich entlang der Mittelachse (Z) erstreckt und einen Raum (35) zur Aufnahme des Rotors (20) begrenzt, worin der Träger (30) zudem Aufnahmeräume (41, 42) zur Aufnahme der Statorspulen (32, 33) umfasst, die sich in zur Mittelachse (Z) parallelen Ebenen erstrecken und radiale Umfangswände aufweisen, die an die Nuten (15, 16) zur Aufnahme des einteiligen Magnetkörpers (11) angepasst sind (11),
**dadurch gekennzeichnet, dass** die Statorspulen (32, 33) vor dem Zusammenbau des Trägers (30) in dem einteiligen Magnetkörper (11) in den Aufnahmeräumen (41, 42) aufgenommen werden;
worin der Träger aus einem Stück geformt ist und zudem ein axiales Ende der Aufnahmeräume (41, 42) aufweist, das näher an der Mittelachse (Z) liegt als das andere axiale Ende, und einen Durchmesser aufweist, der größer ist als der Durchmesser des Rotors, so dass der Rotor mit diesem axialen Ende in den Träger eingesetzt werden kann.

2. Drehmomentmotor nach Anspruch 1, **dadurch gekennzeichnet, dass** der Wicklungsträger (30) zumindest im Bereich der Aufnahmeräume für die Statorwicklungen (32, 33) elektrisch isolierend ist.

3. Drehmomentmotor nach einem der Ansprüche 1 bis 2, **dadurch gekennzeichnet, dass** der Wicklungsträger (30) unmagnetisch ist.

4. Drehmomentmotor nach einem der Ansprüche 1 bis 3, **dadurch gekennzeichnet, dass** der Wicklungsträger (30) aus Keramikmaterial besteht.

5. Drehmomentmotor nach einem der Ansprüche 1 bis 4, **dadurch gekennzeichnet, dass** der Stator (10) zwei Permanentmagnete (13, 14), die einander gegenüberliegend angeordnet sind, und ein Paar radiale Zähne (12) umfasst, die zwei Nuten (15, 16) zur Aufnahme von zwei Statorspulen (32, 33) ausbilden, und dass der Träger (30) zwei Aufnahmeräume (41, 42) zur Aufnahme der Statorspulen (32, 33) umfasst.

6. Drehmomentmotor nach einem der Ansprüche 1 bis 5, **dadurch gekennzeichnet, dass** die Statorspulen (32, 33) aus Drähten bestehen, die mit einem Isolierstoff mineralischen Ursprungs, wie beispielsweise Keramik, beschichtet sind.

7. Drehmomentmotor nach einem der Ansprüche 1 bis 6, **dadurch gekennzeichnet, dass** der Träger (30) Lager des Rotors (20) trägt.

8. Drehmomentmotor nach einem der Ansprüche 1 bis 7, **dadurch gekennzeichnet, dass** der Träger (30) sich radial erstreckende Anschläge umfasst, die Winkelanschläge des Rotors ausbilden.

9. Drehmomentmotor nach einem der Ansprüche 1 bis 8, **dadurch gekennzeichnet, dass** der Träger (30) zudem ein umlaufendes Kompartiment zum Verbinden der Statorwicklungen mit einem Versorgungsdraht des Drehmomentmotors umfasst.

10. Drehmomentmotor nach einem der Ansprüche 1 bis 9, **dadurch gekennzeichnet, dass** der Träger (30) zudem eine Führungsnut umfasst, die ausgestaltet ist, mindestens einen Versorgungsdraht des Drehmomentmotors zu führen und zu halten.

11. Verfahren zum Zusammenbau eines Drehmomentmotors der umfasst, einen Stator (10) und einen Rotor (20), die sich entlang derselben Mittelachse (Z) erstrecken, worin der Stator (10) zudem einen einteiligen Magnetkörper (11) und mindestens ein Paar radiale Zähne (12) umfasst, die sich entlang der Mittelachse (Z) erstrecken und Nuten (15, 16) zur Aufnahme von Statorspulen (32, 33) definieren und einen radialen Luftspalt mit dem Rotor ausbilden, mindestens einen Permanentmagneten (13, 14), der von dem einteiligen Magnetkörper (11) getragen wird, einen Wicklungsträger (30), der einstückig ausgebildet ist, worin die Statorwicklungen (32, 33) einen Hohlkörper (34) umfassen, der sich entlang der Mittelachse (Z) erstreckt und einen Raum (35) zur Aufnahme des Rotors (20) begrenzt, worin der Träger (30) zudem Aufnahmeräume (41, 42) zur Aufnahme der Statorspulen (32, 33) umfasst, die sich in zur Mittelachse (Z) parallelen Ebenen erstrecken und radiale Umfangswände aufweisen, die an die Aufnahmenuten (15, 16) des einteiligen Magnetkörpers (11) angepasst sind (11), worin der Träger zudem ein axiales Ende der Aufnahmeräume (41, 42) aufweist, das näher an der Mittelachse (Z) liegt als das andere axiale Ende und einen Durchmesser aufweist, der größer ist als der Durchmesser des Rotors (20),
**dadurch gekennzeichnet, dass** es die Schritte umfasst:
Montage der Statorwicklungen (32, 33) auf dem Wicklungsträger (30),
axiales Einsetzen des mit den Statorwicklungen (32, 33) ausgestatteten Wicklungsträgers (30) in den einteiligen Magnetkörper (11) des Stators,
axiales Einsetzen des Rotors (20) in den Körper (34) des Wicklungsträgers (30).

## Claims

1. Torque motor comprising a stator (10) and a rotor (20) extending along the same central axis (Z), said stator (10) further comprising a single-piece magnetic body (11), at least one pair of radial teeth (12) extending along the central axis (Z) and defining notches (15, 16) for receiving stator coils (32, 33) and forming a radial air-gap with said rotor, at least one permanent magnet (13, 14) borne by said single-piece magnetic body (11), and comprising a winding support (39) for the stator coils (32, 33) comprising a hollow body (34) extending along the central axis (Z) and delimiting an enclosure (35) for receiving said rotor (20), said support (30) further comprising housings (41, 42) for receiving said stator coils (32, 33) extending in planes in parallel with the central axis (Z) and having peripheral radial walls shaped to match said notches (15, 16) for receiving said single-piece magnetic body (11), **characterised in that** said stator coils (32, 33) are housed in the receiving housings (41, 42) prior to assembly of said support (30) in said single-piece magnetic body (11), said support is formed from a single part and further having an axial end of the receiving housings (41, 42) more closely adjacent to the central axis (Z) than the other axial end having a diameter larger than the diameter of the rotor such that said rotor can be housed in said support via this axial end.

2. Torque motor as claimed in claim 1, **characterised in that** said winding support (30) is electrically insulating, at least at the housings for receiving the stator coils (32, 33).

3. Torque motor as claimed in any one of claims 1 to 2, **characterised in that** said winding support (30) is non-magnetic.

4. Torque motor as claimed in any one of claims 1 to 3, **characterised in that** said winding support (30) is made of a ceramic material.

5. Torque motor as claimed in any one of claims 1 to 4, **characterised in that** said stator (10) comprises two permanent magnets (13, 14) arranged facing one another, one pair of radial teeth (12) defining two notches (15, 16) for receiving two stator coils (32, 33), and **in that** said support (30) comprises two housings (41, 42) for receiving said stator coils (32, 33).

6. Torque motor as claimed in any one of claims 1 to 5, **characterised in that** said stator coils (32, 33) are formed from leads coated with an insulator of mineral origin, such as ceramic material.

7. Torque motor as claimed in any one of claims 1 to 6, **characterised in that** said support (30) bears bearings of said rotor (20).

8. Torque motor as claimed in any one of claims 1 to 7, **characterised in that** said support (30) comprises stops extending radially and forming angular stops for the rotor.

9. Torque motor as claimed in any one of claims 1 to 8, **characterised in that** said support (30) further comprises a peripheral compartment for connecting the stator coils with a power supply lead for said torque motor.

10. Torque motor as claimed in any one of claims 1 to 9, **characterised in that** said support (30) further comprises a guide notch configured to be able to guide and hold at least one power supply lead for said torque motor.

11. Method for assembling a torque motor comprising a stator (10) and a rotor (20) extending along the same central axis (Z), said stator (10) further comprising a single-piece magnetic body (11), at least one pair of radial teeth (12) extending along the central axis (Z) and defining notches (15, 16) for receiving stator coils (32, 33) and forming a radial air-gap with said rotor, at least one permanent magnet (13, 14) borne by said single-piece magnetic body (11), a winding support (30), being formed from a single part, for the stator coils (32, 33) comprising a hollow body (34) extending along the central axis (Z) and delimiting an enclosure (35) for receiving said rotor (20), said support (30) further comprising housings (41, 42) for receiving said stator coils (32, 33) extending in planes in parallel with the central axis (Z) and having peripheral radial walls shaped to match said notches (15, 16) for receiving said single-piece magnetic body (11), said support further having an axial end of the receiving housings (41, 42) more closely adjacent to the central axis (Z) than the other axial end having a diameter larger than the diameter of the rotor (20),
**characterised in that** it comprises the following steps:
- mounting the stator coils (32, 33) on the winding support (30),
- axially inserting the winding support (30) fitted with the stator coils (32, 33) in the single-piece magnetic body (11) of the stator,
- axially inserting the rotor (20) in the body (34) of the winding support (30).
